# DEMANDE DE BREVET EUROPEEN

(11) **EP 1 016 485 A1**
(43) Date de publication de la demande: **05.07.2000**
(21) Numéro de dépôt: 99403100.3
(22) Date de dépôt: 09.12.1999
(51) Int. Cl.: B23K 9/09

(54) **Poste de soudage par arc électrique à pulsations de courant de haute fréquence**

(30) Priorité: 29.12.1998 FR 9816535
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); LA SOUDURE AUTOGENE FRANCAISE, F-75007 Paris (FR)
(72) Inventeur: Eyschen, Jean-Pierre, 95530 La Frette sur Seine (FR); Chevalier, Richard, 95300 Pontoise (FR); Reymond, Christian, 95160 Montmorency (FR)
(74) Mandataire: Le Moenner, Gabriel

(57) **Abrégé**

Le poste (10) de soudage par arc électrique comporte un générateur (12, 14) de courant de soudage adapté pour produire, entre la masse (18) et une électrode de soudage (16), un courant de soudage pulsé à haute fréquence oscillant entre un courant de base et un courant de crête. Le générateur (12, 14) comporte une source (22) de courant de base ; au moins une source (24) de courant de pic ; des moyens de commutation (34, 36) adaptés pour connecter la ou chaque source (24) de courant de pic, en parallèle, à la source (22) de courant de base ; et des moyens (38) de commande des moyens (34, 36) de commutation, adaptés pour commander leur changement d'état à la fréquence d'oscillation du courant de soudage, pour produire, le courant de base ou le courant de crête, ce dernier étant formé de la somme du courant de base et du ou de chaque courant de pic.

## Description

La présente invention concerne un poste de soudage par arc, du type comportant un générateur de courant de soudage adapté pour produire, entre la masse et une électrode de soudage, un courant de soudage pulsé à haute fréquence oscillant entre un courant de base et un courant de crête.

Lors du soudage avec des procédés de type TIG ou plasma, il est souhaitable de rigidifier l'arc par l'établissement de pulsations dans le courant de soudage.

La rigidification de l'arc est d'autant plus importante que la fréquence et le rapport de l'intensité efficace sur l'intensité moyenne sont élevés.

L'intensité efficace et la fréquence des pulsations de courant sont limitées par la vitesse maximale de croissance du courant dans le circuit de soudage. Ainsi, pour une variation de courant de 500 A, la fréquence maximale des pulsations atteinte est de l'ordre de 2500 Hz.

Les meilleures performances sont obtenues avec des sources sans inductance interne formées par des amplificateurs linéaires. Toutefois, leur rendement est faible et leur coût est élevé.

L'invention a pour but de proposer un poste de soudage permettant l'établissement d'un courant pulsé de fréquence élevée, de l'ordre de 2500 Hz, avec des grandes fluctuations du courant, de l'ordre de 900 A, et ce avec un coût de revient réduit.

A cet effet, l'invention a pour objet un poste de soudage par arc électrique du type précité, caractérisé en ce que ledit générateur comporte :
- une source de courant de base connectée entre la masse et l'électrode de soudage ;
- au moins une source de courant de pic ;
- des moyens de commutation adaptés pour connecter la ou chaque source de courant de pic, en parallèle, à la source de courant de base ; et
- des moyens de commande des moyens de commutation, adaptés pour commander leur changement d'état à la fréquence d'oscillation du courant de soudage, pour produire entre la masse et l'électrode de soudage, le courant de base ou le courant de crête, ce dernier étant formé de la somme du courant de base et du ou de chaque courant de pic.

Suivant des modes particuliers de réalisation, le poste de soudage comporte l'une ou plusieurs des caractéristiques suivantes :
- il comporte d'une part, un module de génération de puissance comportant la source de courant de base et la ou chaque source de courant de pic, et, d'autre part, un module de traitement du courant de soudage, comprenant lesdits moyens de commutation, les deux modules étant reliés par un faisceau de câbles électriques, et le module de traitement du courant de soudage est disposé au voisinage immédiat de l'électrode de soudage et à l'écart du module de génération de puissance ;
- la ou chaque source de courant de pic, montée en série avec une diode est reliée en parallèle à la source de courant de base, et les moyens de commutation comportent un organe de commutation monté en parallèle avec la ou chaque source de courant de pic, lequel organe de commutation est commandé pour assurer la mise à la masse de la source de courant de pic associée, lors des phases d'établissement d'un courant de base entre l'électrode de soudage et la masse ;
- il comporte un circuit de protection du ou de chaque organe de commutation, monté en parallèle avec celui-ci, lequel circuit de protection est adapté pour limiter la tension aux bornes de l'organe de commutation ; et
- le circuit de protection comporte un condensateur monté en parallèle avec une source de courant adaptée pour maintenir une charge sensiblement constante du condensateur .

L'invention concerne également l'utilisation d'un poste de soudage selon l'invention pour produire un courant de soudage pulsé à haute fréquence oscillant entre un courant de base et un courant de crête, ledit courant de soudage étant produit entre au moins une masse et au moins une électrode de soudage.

De plus, l'invention a trait aussi à l'utilisation d'un poste de soudage selon l'invention pour fournir un courant de soudage pulsé à haute fréquence lors de la mise en oeuvre d'une opération de soudage d'une ou plusieurs pièces métalliques par mise en oeuvre d'un procédé de soudage TIG, MIG, à l'arc submergé ou plasma. Par TIG, on entend Tungsten Inert Gas et par MIG, on entend Metal Inert Gas.

De préférence, les pièces métalliques sont en acier, acier inoxydable, en aluminium ou leurs alliages.

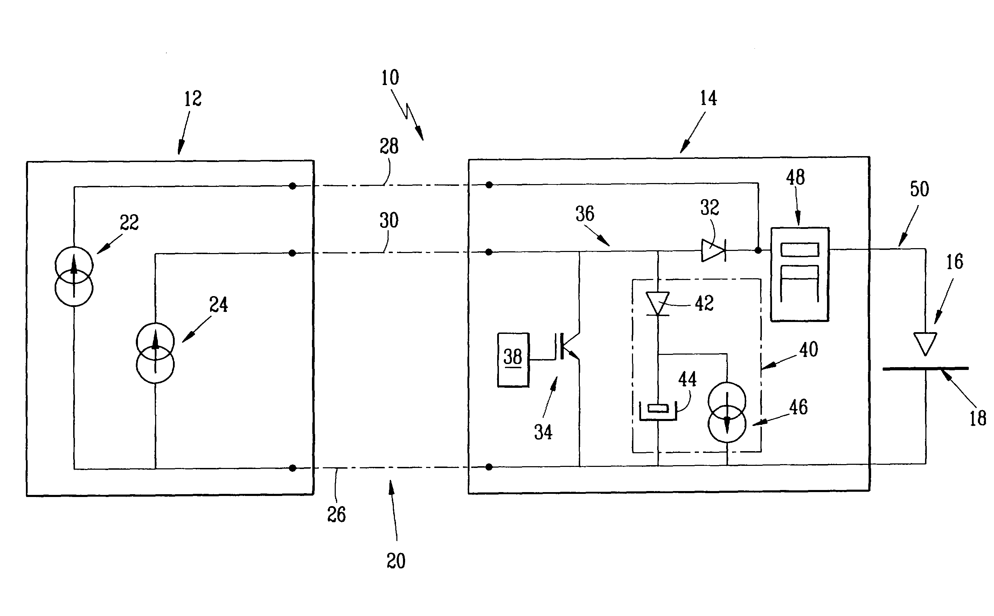

L'invention sera mieux comprise à la lecture de la description qui va suivre, donnée uniquement à titre d'exemple, et faite en se référant à la figure unique qui est une vue schématique d'un poste de soudage selon l'invention.

Le poste de soudage 10 comporte un module 12 de génération de puissance et un module 14 de traitement du courant de soudage en sortie duquel sont reliées une électrode de soudage 16 et une prise de masse 18.

Les modules 12 et 14 sont reliés l'un à l'autre par un faisceau 20 de câbles électriques permettant le déplacement indépendant des deux modules et leur mise à l'écart mutuel.

Le module de génération de puissance 12 comporte une source de courant de base 22 et une source de courant de pic 24. Les sources 22 et 24 sont adaptées chacune pour produire un courant moyen de l'ordre de 500 A.

Les deux sources 22, 24 sont reliées à un câble de masse commun 26 du faisceau 20. De plus, les sorties des sources 22 et 24 sont reliées à des câbles notés respectivement 28, 30 du faisceau 20.

Les câbles 26, 28 et 30 relient le module de génération de puissance 12 à l'entrée du module de traitement du courant de soudage 14.

La sortie de la source de courant de pic 24 est associée en série avec une diode 32. Ainsi connectée à la diode 32, elle est reliée en parallèle à la source de courant de base 22.

Un organe de commutation 34, formé d'un transistor de puissance, est disposé dans le module 14 de traitement du courant de soudage entre la sortie de la source de courant de pic 24 et la masse. Ainsi, cet organe de commutation est monté en parallèle avec la source de courant de pic 24.

L'organe de commutation 34, associé à la diode 32, forme des moyens de commutation 36 adaptés pour connecter sélectivement la source de courant de pic 24 en parallèle à la source de courant de base 22.

Le module 14 de traitement du courant de soudage comporte en outre des moyens 38 de commande des moyens de commutation. Ces moyens de commande 38 sont reliés à la base du transistor 34 et sont adaptés pour adresser un signal de commande en créneau assurant un changement d'état du transistor 34 à la fréquence de pulsation souhaitée pour le courant de soudage. Cette fréquence est par exemple de 2500 Hz.

Un circuit 40 de protection de l'organe de commutation 34 est monté en parallèle avec celui-ci dans le module 14 de traitement du courant de soudage. Ce circuit de protection comporte, en série, une diode 42 et un condensateur 44. Une source de courant 46 est montée en parallèle avec le condensateur 44 afin de stabiliser la tension aux bornes de celui-ci à une valeur sensiblement égale à 250 volts.

Enfin, le module 14 de traitement du courant de soudage comporte un dispositif d'amorçage 48 adapté, comme connu en soi, pour établir l'arc électrique initial entre l'électrode de soudage 16 et la pièce à souder connectée à la masse.

Avantageusement, la longueur du câble 50 reliant l'électrode de soudage 16 à la sortie du module 14 de traitement du courant de soudage est aussi réduite que possible. En particulier, le module 14 de traitement du courant de soudage est disposé au voisinage immédiat de l'électrode de soudage 16 et de la masse 18. A cet effet, le module de génération de puissance 12 est déporté à l'écart de l'électrode de soudage 16, la liaison étant assurée par le faisceau de câbles 20. Ainsi, la longueur du faisceau de câbles 20 est très supérieure à la longueur du câble 50 alimentant l'électrode de soudage 16.

Le poste de soudage schématisé sur la figure unique fonctionne de la manière suivante.

Le module de génération de puissance 14 est adapté pour sommer les courants de base et les courants de pic issus respectivement des sources 22 et 24, lorsque l'organe de commutation 34 est bloqué, et ainsi obtenir un courant de crête. Lorsque l'organe de commutation 34 est passant, au contraire, le courant de pic est dérivé vers la masse. L'électrode 16 est alors alimentée seulement avec le courant de base.

Ainsi, à la fréquence de commutation du transistor 34, sous la commande des moyens de pilotage 38, le courant établi entre l'électrode de soudage 16 et la masse 18 oscille entre le courant de base et le courant de crête constitué de la somme des courants de base et du courant de pic.

La diode 32 évite la circulation du courant de base vers la masse lorsque l'organe de commutation 34 est passant.

Du fait de la présence du dispositif d'amorçage 48, celui-ci crée une inductance qui s'ajoute à celle du câble 50 alimentant l'électrode de soudage 16. Ainsi, lors du blocage de l'organe de commutation 34, la remontée du courant, du courant de base vers le courant du crête, entraîne du fait de l'existence de cette inductance une surtension aux bornes de l'organe de commutation 34. Afin d'éviter sa destruction, le circuit de protection 40 limite, par la charge du condensateur 44, la tension aux bornes de l'organe de commutation 34. A cet effet, la source de courant 46 assure la stabilisation de la tension aux bornes du condensateur à une valeur sensiblement égale à 250 volts.

La commande en fréquence de l'organe de commutation 34, à partir des moyens de commande 38, est réalisée à partir d'un microprocesseur, adressant un signal de commande adapté à l'organe de commutation 34.

Le poste de soudage décrit ici est particulièrement bien adapté aux installations de soudage mono ou multi cathodes lorsque la pièce à souder se déplace par rapport à l'électrode de soudage 16, cette dernière restant fixe. Tel est le cas par exemple des installations pour le soudage de tubes en continu.

En variante non représentée, le module de puissance 12 comporte plusieurs sources de courant de pic, chacune associée à des moyens de commutation 36 permettant de sommer les courants de pic au courant de base lors des phases d'alimentation de l'électrode de soudage avec le courant de crête ainsi obtenu.

Dans de telles installations, il est possible de disposer le module de traitement du courant de soudage à proximité immédiate de l'électrode 16, le module de génération de puissance 12 étant déporté à l'écart.

La séparation du module 12 de génération de puissance et du module 14 de traitement du courant de soudage permet de réduire au maximum l'inductance formée par le câble 50 d'alimentation de l'électrode de soudage.

Ainsi, la diminution de l'inductance du circuit améliore la vitesse maximale de croissance du courant, ce qui permet une meilleure rigidification de l'arc de soudage.

Une telle solution, consistant à déporter le module de traitement du courant de soudage, peut être mise en oeuvre également dans un poste de soudage dont la pulsation du courant n'est pas assurée à partir d'une source de courant de base et d'une source de courant de pic dont les intensités sont sommées.

En particulier, cet agencement peut être mis en oeuvre avec une source à découpage, dont le transformateur et les moyens de redressement du courant constituant le module de génération de puissance sont reliés par de longs câbles à un module de traitement du courant de soudage comportant des moyens de hachage du courant, ces derniers étant disposés au voisinage immédiat de l'électrode de soudage.

On comprend que, dans ce cas également, l'inductance du câble reliant l'électrode de soudage est aussi réduite que possible, améliorant ainsi les performances du poste de soudage. Une telle structure permet notamment de doubler la fréquence de pulsation du courant.

## Revendications

1. Poste (10) de soudage par arc électrique, du type comportant un générateur (12, 14) de courant de soudage adapté pour produire, entre la masse (18) et une électrode de soudage (16), un courant de soudage pulsé à haute fréquence oscillant entre un courant de base et un courant de crête, caractérisé en ce que ledit générateur (12, 14) comporte :
- une source (22) de courant de base connectée entre la masse (18) et l'électrode de soudage (16) ;
- au moins une source (24) de courant de pic ;
- des moyens de commutation (34, 36) adaptés pour connecter la ou chaque source (24) de courant de pic, en parallèle, à la source (22) de courant de base ; et
- des moyens (38) de commande des moyens (34, 36) de commutation, adaptés pour commander leur changement d'état à la fréquence d'oscillation du courant de soudage, pour produire entre la masse (18) et l'électrode de soudage (16), le courant de base ou le courant de crête, ce dernier étant formé de la somme du courant de base et du ou de chaque courant de pic.

2. Poste de soudage selon la revendication 1, caractérisé en ce qu'il comporte d'une part, un module (12) de génération de puissance comportant la source de courant de base (22) et la ou chaque source de courant de pic (24), et, d'autre part, un module (14) de traitement du courant de soudage, comprenant lesdits moyens de commutation (34, 36), les deux modules (12, 14) étant reliés par un faisceau (20) de câbles électriques (26, 28, 30), et en ce que le module (14) de traitement du courant de soudage est disposé au voisinage immédiat de l'électrode de soudage (16) et à l'écart du module (12) de génération de puissance.

3. Poste de soudage selon la revendication 1 ou 2, caractérisé en ce que la ou chaque source de courant de pic (24), montée en série avec une diode (32) est reliée en parallèle à la source de courant de base (22), et en ce que les moyens de commutation (34, 36) comportent un organe de commutation (34) monté en parallèle avec la ou chaque source de courant de pic (24), lequel organe de commutation (34) est commandé pour assurer la mise à la masse de la source de courant de pic (24) associée, lors des phases d'établissement d'un courant de base entre l'électrode de soudage (16) et la masse (18).

4. Poste de soudage selon la revendication 3, caractérisé en ce qu'il comporte un circuit (40) de protection du ou de chaque organe de commutation (34), monté en parallèle avec celui-ci, lequel circuit de protection (40)

5. Poste de soudage selon la revendication 4, caractérisé en ce que le circuit de protection (40) comporte un condensateur (44) monté en parallèle avec une source de courant (46) adaptée pour maintenir une charge sensiblement constante du condensateur (44).

6. Utilisation d'un poste de soudage selon l'une des revendications 1 à 5 pour produire un courant de soudage pulsé à haute fréquence oscillant entre un courant de base et un courant de crête, ledit courant de soudage étant produit entre au moins une masse et au moins une électrode de soudage.

7. Utilisation d'un poste de soudage selon l'une des revendications 1 à 5 pour fournir un courant de soudage pulsé à haute fréquence lors de la mise en oeuvre d'une opération de soudage d'une ou plusieurs pièces métalliques par mise en oeuvre d'un procédé de soudage TIG, MIG, à l'arc submergé ou plasma.

8. Utilisation d'un poste de soudage selon l'une des revendications 6 ou 7, pour souder des pièces métalliques en acier, acier inoxydable, en aluminium ou leurs alliages.
